# EUROPEAN PATENT SPECIFICATION

(11) **EP 4 455 821 B1**
(45) Date of publication and mention of the grant of the patent: **25.03.2026**
(21) Application number: 22923852.2
(22) Date of filing: 28.01.2022
(51) Int. Cl.: G05D 1/224, G05D 1/248, G05D 1/249, G05D 1/243

(54) **WORKING ROBOT SYSTEM**
ARBEITSROBOTERSYSTEM
SYSTÈME DE ROBOT DE TRAVAIL

(43) Date of publication of application: 30.10.2024
(73) Proprietor: Yamabiko Corporation, Ohme-shi Tokyo 198-8760 (JP)
(72) Inventor: ISHIHIRA, Daisuke, Ohme-shi, Tokyo 198-8760 (JP); KANEKO, Kazuhiro, Ohme-shi, Tokyo 198-8760 (JP); ISHIHIRA, Haruka, Ohme-shi, Tokyo 198-8760 (JP)
(74) Representative: Canzler & Bergmeier Patentanwälte Partnerschaft mbB
(86) International application number: PCT/JP2022/003270
(87) International publication number: WO 2023/144988

(56) References cited:
- WO-A1-2021/157708
- JP-A- 2008 046 761
- JP-A- 2008 046 761
- JP-A- 2008 144 379
- JP-A- 2015 145 784
- JP-A- 2015 145 784
- JP-A- 2018 170 991
- JP-A- 2018 170 991
- JP-A- 2019 075 014
- JP-A- 2020 143 901
- US-B2- 9 562 764

## Description

### Technical field

The present invention relates to a working robot system.

### Background art

A working robot (autonomous traveling working machine) that performs various kinds of work while autonomously traveling on a field is known. To travel autonomously, this working robot includes a positioning system, for example, a GPS (global positioning system): this positioning system acquires the actual position (self-position) of the working robot. The working robot controls the traveling of the machine body to match the traveling route obtained from the self-position to a target route.

As this sort of working robot, there has been proposed a working robot including an imaging device configured to capture an image of a predetermined area including a working area to acquire a captured image, a positioning device configured to acquire position information indicating a position at which the image is captured, a map producing unit configured to produce a map based on the captured image and the position information on the position at which the image is captured, a display device configured to display the map, and a working area determination unit configured to determine a working area in which the working robot performs work, based on an area designation in the map displayed on the display device (see JP 2019 075014 A).

JP 2018 170991 A discloses the features of the preamble of claim 1. More specifically, this document discloses an autonomous traveling system of a farm work vehicle. Its autonomous traveling is controlled by an unmanned flying device capable of communicating with the farm working vehicle. The unmanned flying device has an image capturing device for capturing the farm work vehicle. The autonomous traveling of the farm working vehicle is stopped when an abnormality occurs in autonomous traveling of the farm working vehicle based on a photographed image of the photographing device.

JP 2015 145784 A discloses that a drone having GPS is measured by means of an optical position-measurement apparatus. From two GPS-positions of the drone and the corresponding measurements of the drone by the position-measurement apparatus, the position of the position-measurement apparatus is derived.

JP 2008 046761 A discloses that the traffic circumstances of a road are picked up by a camera installed near a road, and each pickup image (a) is processed for edge extraction, and transmitted as a pre-processed image from an on-road device. The received pre-processed images (b) and (c) are displayed on a screen in the vehicle so as to be blinked or classified based on colors by an on-vehicle device. In this case, the received preprocessed images may be displayed so as to be overlapped on the original image (a), and an image (d) is obtained.

US 9 562 764 B2 discloses a method for determining absolute orientation of a platform. In one embodiment, a first sky polarization data set for a first time Ti is measured using a sky polarization sensor disposed on a platform. A second sky polarization data set is obtained at a second time Tj. A difference in orientation between the first sky polarization data set and the second sky polarization data set is determined using an orientation determiner. The difference in orientation is provided as at least one orientation parameter for the platform at time Tj. The at least one orientation parameter is used to provide a direction relative to a reference point on the platform.

### Summary of Invention

### Technical Problem

According to the prior art described above, in order to produce the map based on the captured image and the position information on the position at which the image is captured, the positioning device is mounted on the imaging device to acquire the position information of the position at which the image is captured. Therefore, it is required to store the map information in a high-capacity memory, as well as the positioning device needs to be mounted on the imaging device. This causes a problem of increasing the system cost.

In addition, when the positioning device cannot receive radio waves well in some locations, it is not possible to acquire the position information on the locations, and therefore, it may not be possible to produce a map covering the entire area of the captured image. This causes a problem that it is not possible to properly control the autonomous travel of the working robot.

The present invention is proposed to address the above-described circumferences. Therefore, problems to be solved by the invention are, in a working robot system, to reduce the system cost, and allow a working robot to autonomously travel in a proper manner even when position information in some locations cannot be acquired.

### Solution to Problem

The above technical problem is solved by a working robot system according to the features of claim 1. Advantageous embodiments of the invention are defined in the dependent claims.

### Advantageous Effect of Invention

According to the invention having the above-described features, it is possible in the working robot system to suppress the increase in system costs and enable the working robot to travel autonomously to a desired position even when position information cannot be acquired in some locations.

### Brief Description of Drawings

Fig. 1 is a view for illustrating an example of the configuration of a working robot system according to an embodiment of the invention;
Fig. 2 is a view for illustrating an example of the configuration of a controller;
Fig. 3 is a view for illustrating an example of the function of the controller;
Fig. 4 is a view for illustrating an example of the function of a coordinate conversion processor to acquire position information of a target;
Fig. 5 is a view for illustrating another example of the function of the coordinate conversion processor to acquire position information of a target;
Fig. 6 is a view for illustrating another example of the function of the controller;
Fig. 7 is a view for illustrating an example of the function of the coordinate conversion processor to acquire position information of a working robot at the position where positioning information cannot be acquired by a satellite positioning system;
Fig. 8 is a view for illustrating another example of the function of the coordinate conversion processor to acquire position information of the working robot at the position where positioning information cannot be acquired by the satellite positioning system; and
**Fig.** 9 is a view for illustrating another example of the function of the coordinate conversion processor to acquire position information of the working robot at the position where positioning information cannot be acquired by the satellite positioning system.

### Description of Embodiments

Hereinafter, embodiments of the present invention will be described with reference to the drawings. In the description below, the same reference numbers in the different drawings indicate the same functional parts, and therefore repeated description for each of the drawings is omitted.

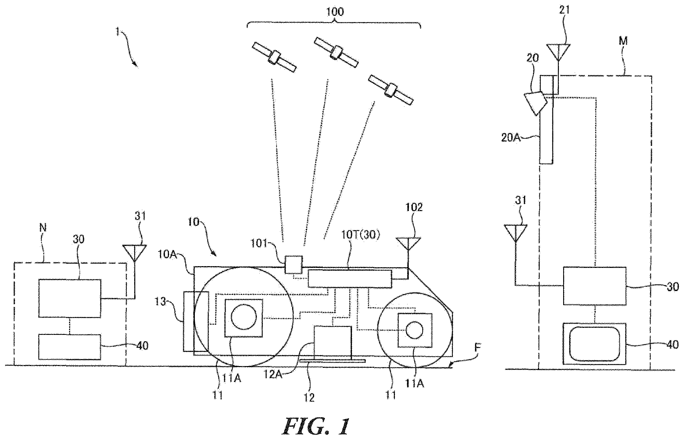

A working robot system 1 includes a working robot 10, an imaging apparatus 20, and a controller 30 as the basic configuration illustrated in Fig. 1.

The working robot 10 is an autonomous traveling working machine that performs various kinds of work while autonomously traveling on a field F. The working robot 10 includes a self-position detector 101 configured to detect the self-position to travel autonomously. Examples of the self-position detector 101 include a GNSS (global navigation satellite system) sensor configured to receive radio signals transmitted from satellites 100 of a GNSS such as GPS and RTK-GPS, and a receiver configured to receive radio waves transmitted from a plurality of beacons disposed in or around the field F. Here, one or more self-position detector (s) 101 may be provided in one working robot 10. When the working robot 10 includes more than one self-position detectors 101, the self-position output from each self-position detector 101 is integrated, and a single self-position is output.

The kinds of work that the working robot 10 performs are not limited. Examples of the work include mowing work to mow grass (including lawns) on a field along a traveling route of the working robot 10, cleaning work, and collecting work for balls dispersed on the field. To perform the work, the working robot 10 includes a traveling device 11 with wheels to travel on the field F, a working device 12 configured to perform work on the field F, a traveling drive device (motor) 11A configured to drive the traveling device 11, a working drive device (motor) 12A configured to actuate the working device 12, a control device 10T configured to control the traveling drive device 11A and the working drive device 12A, and a battery 13 as a power source of the working robot 10: these components are all provided in a machine body 10A.

The traveling device 11 includes right and left traveling wheels. The traveling drive device 11A controls the traveling wheels to drive separately from each other. By this means, the working robot 10 can move forward and backward, turn right and left, and steer in any direction. Here, the traveling device 11 may be a crawler type traveling device including a pair of right and left crawlers instead of the right and left traveling wheels. To perform the autonomous travel of the working robot 10, the self-position information output by the self-position detector 101 is input to the control device 10T. The control device 10T controls the traveling drive device 11A so that the self-position matches to the position of the preset target route or includes the self-position within the preset area.

The imaging apparatus 20 captures an image of the field F, which the working robot 10 performs the work, and outputs the captured image. With the illustrated example, the imaging apparatus 20 is installed on a facility M located inside or outside of the field F. The imaging apparatus 20 is supported by a support member 20A. The imaging apparatus 20 looks down at the field F to capture an image of the filed F, and outputs the captured image. The imaging apparatus 20 supported by the support member 20A may be installed on a tree and a pillar, as well as the facility M. For example, the imaging apparatus 20 can appropriately adjust imaging conditions. With the illustrated example, the angle of the imaging direction and the height of supporting the imaging apparatus 20 can be manually or automatically adjusted by adjusting the support member 20A. In addition, the magnification and the angle of view for imaging can be adjusted by adjusting optics of the imaging apparatus 20.

The controller 30 acquires information of the image of the field F captured by the imaging apparatus 20 and the self-position information output by the self-position detector 101 of the working robot 10. Then, the controller 30 performs predetermined computations. As illustrated, the controller 30 may be installed in the facility M, which the imaging apparatus 20 is also installed, or a location far from the imaging apparatus 20, for example, in a waiting facility N. Also, the control device 10T provided in the machine body 10A of the working robot 10 may function as the controller 30.

The controller 30 acquires information such as the self-position of the working robot 10 via a communication unit 31. In the working robot 10, the self-position information is input from the self-position detector 101 to the control device 10T. Then, the self-position information is transmitted from a communication unit 102 of the control device 10T to the communication unit 31 of the controller 30. The control device 10T acquires the self-position information from the self-position detector 101 via a predetermined wired or wireless line.

When the controller 30 is installed in the facility M, which the imaging apparatus 20 is also installed, the information in the captured image output from the imaging apparatus 20 is input to the controller 30 via a predetermined wired or wireless line. Meanwhile, the information in the captured image is transmitted from a communication unit 21 of the imaging apparatus 20 to the communication unit 31 of the controller 30 when the controller 30 is installed in a location far from the imaging apparatus 20. When the control device 10T of the working robot 10 functions as the controller 30, the information in the captured image is transmitted from the communication unit 21 of the imaging apparatus 20 or the communication unit 31 of the controller 30 to the communication unit 102 of the control device 10T.

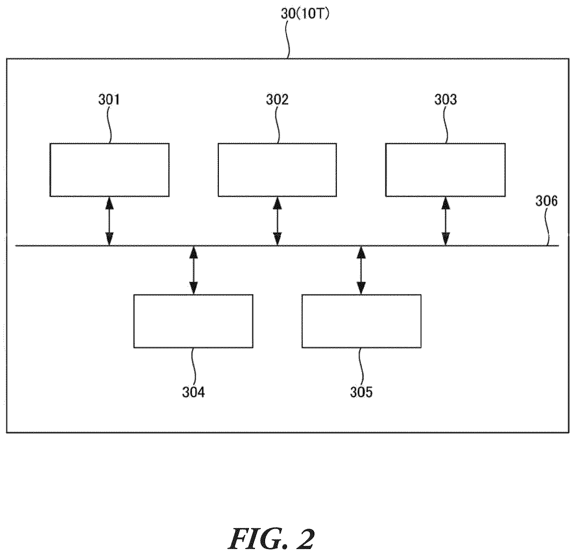

As illustrated in Fig. 2, the controller 30 or the control device 10T includes a processor 301, a memory 302, a storage 303, an input and output interface 304, and a communication interface 305: these components are connected to each other via a bus 306 so that they can transmit and receive the information to and from each other. In the description below, the controller 30 includes the control device 10T.

The processor 301 is, for example, a CPU (central processing unit); the memory 302 is, for example, ROM (read-only memory) or RAM (random access memory). The processor 301 executes various programs stored in the memory 302 (e.g. ROM) to perform computations for the controller 30. The ROM of the memory 302 stores the programs executed by the processor 301 and the data required for the processor 301 to execute the programs. The RAM of the memory 302 is a main memory such as DRAM (dynamic random access memory) or SRAM (static random access memory). The RAM functions as a workspace used when the processor 301 executes the programs and temporarily stores the data that is input to the controller 30 or the control device 10T.

The input and output interface 304 is a circuit part to input information to the processor 301 and output the computed information from the processor 301. In the case of the control device 10T, the input and output interface 304 is connected to the self-position detector 101, the traveling drive device 11A, and the working drive device 12A described above. In the case of the controller 30 installed far from the working robot 10, the input and output interface 304 is connected to the display device 40. Also, the communication interface 305 is connected to the communication unit 31 (or the communication unit 102) described above.

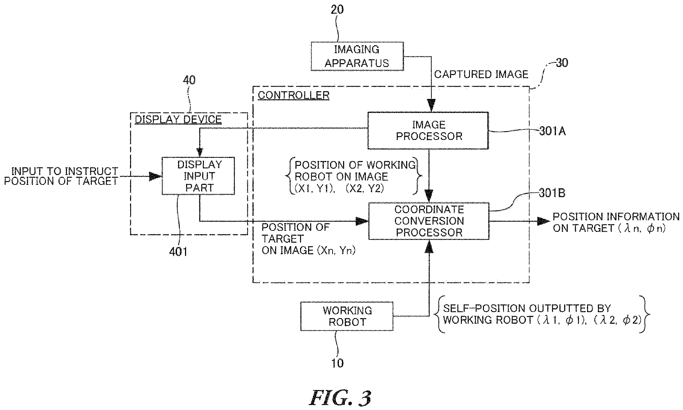

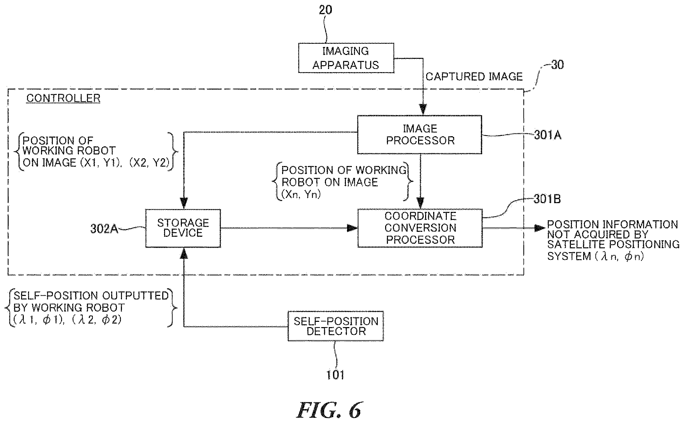

The processor 301 executes the programs stored in the memory 302, and therefore the controller 30 functions as an image processor 301A and a coordinate conversion processor 301B illustrated in Fig. 3 and Fig. 6. The controller 30 acquires the self-position of the working robot 10 at two or more points as position information on actual coordinates. Then, the controller 30 acquires a captured image of the field F including the working robot 10 having output its self-position information. By this means, the controller 30 can assign position information (actual coordinate (λn, φn)) to the positions (pixel coordinate (Xn, Yn)) on the image at which position information on the actual coordinate is not acquired.

The example of the function illustrated in Fig. 3 will be described in the case where the controller 30 controls the autonomous travel of the working robots 10 toward an object (target), a position, or an area without position information. The imaging apparatus 20 captures an image of the field F so that the captured image includes working robot(s) 10 outputting its (their) self-positions at least at two points. The image of the field F captured by the imaging apparatus 20 is input to the image processor 301A of the controller 30. The image processor 301A processes the captured image and outputs the positions (X1, Y1) and (X2, Y2) of the working robots 10 at least at the two points on the image. After being outputted from the image processor 301, the positions (X1, Y1) and (X2, Y2) of the working robots 10 at least at the two points on the image. Then, these positions are input to the coordinate conversion processor 301B. Here, the positions on the image are identified by pixel coordinates of the pixel positions to represent the image. The pixel coordinates correspond to X-Y coordinates.

In addition, after receiving the captured image, the image processor 301A process the captured image to be displayed on the display device 40, and the information in the processed image is input to a display input part 401 of the display device 40. By this means, the display device 40 displays the image of the field F including the working robot(s) 10 outputting at least at the two points.

For inputting the positions to the display input part 401 of the display device 40, the position of, for example, a target on the captured image displayed on the screen, is indicated by a touch or a cursor. This target includes a target object, a target area, and a target position which are needed for the autonomous travel of the working robot(s) 10 on the field. Also, an obstacle, a non-working area, and a relay point are included. The position of the target on the screen is input as a point, a line, or a range surrounded by points or lines.

After the position of the target on the screen is input to the display input part 401 of the display device 40, the display input part 401 outputs the position of the target on the image (pixel coordinate). Then, information of this position is input to the coordinate conversion processor 301B. By this means, the positions (X1, Y1) and (X2, Y2) of the working robot(s) 10 at least at the two points on the image and the position (Xn, Yn) of the target on the image are input to the coordinate conversion processor 301B based on the image captured by the imaging apparatus 20.

Meanwhile, the self-positions (λ1, φ1) and (λ2, φ2) output by the working robot(s) 10 at least at the two points, which are captured by the imaging apparatus 20, are input to the coordinate conversion processor 301B. Here, the self-positions are, for example, the position information of the satellite positioning coordinates output by GNSS sensors of the working robot(s) 10. When the self-position detector 101 of the working robot 10 is a receiver configured to receive the radio waves transmitted from beacons, the self-positions are the position information of the actual coordinates or the satellite positioning coordinates obtained by converting the actual coordinates.

The coordinate conversion processor 301B of the controller 30 performs computations to output the position information (λn, φn) of the target based on the input information described above, that is, the positions (X1, Y1) and (X2, Y2) of the working robots 10 at least at the two points on the image, the position (Xn, Yn) of the target on the image, and the self-positions ((λ1, φ1) and (λ2, φ2) output by the working robots 10 at least at the two points.

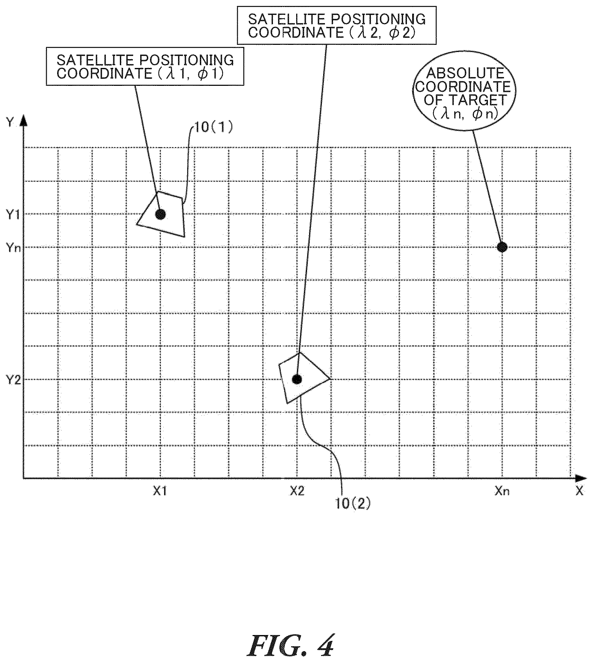

In the computations of the coordinate conversion processor 301B illustrated in Fig. 4, first, X-Y coordinates corresponding to the input positions (X1, Y1) and (X2, Y2) of the working robots 10 on the image are identified. Then, the satellite positioning coordinate (λ1, φ1) is matched to one position (X1, Y1) of the X-Y coordinates. Meanwhile, the satellite positioning coordinate (λ2, φ2) is matched to the other position (X2, Y2) of the X-Y coordinates. The satellite positioning coordinates (absolute coordinates) are assigned to each of the coordinate positions of the X-Y coordinates by overlaying the X-Y coordinates with the satellite positioning coordinates. As a result, the position (Xn, Yn) of the target on the image, which is the identified position of the X-Y coordinates, can obtain the absolute coordinate (λn, φn) corresponding to them.

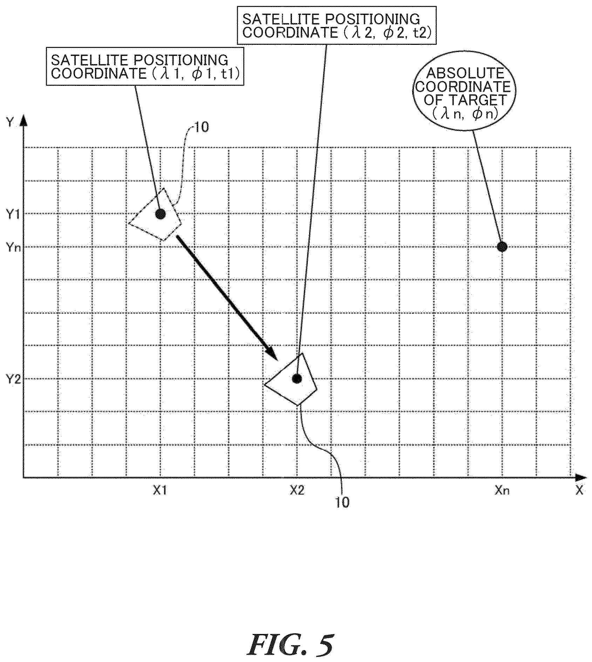

Here, the positions (X1, Y1) and (X2, Y2) of the working robot(s) 10 at least at the two points on the image may be acquired by capturing an image including two or more different working robots 10(1) and 10(2) as illustrated in Fig. 4. Alternatively, those positions may be acquired by capturing images of one traveling working robot 10 at different times (time t1 and time t2) as illustrated in Fig. 5. In this case, one position (X1, Y1, t1) is acquired at time t1, and the other position (X2, Y2, t2) is acquired at time t2.

The positions (X1, Y1) and (X2, Y2) of the working robot(s) 10 on the image may be acquired at least at two points: one position acquired at the past time and another position acquired at the present time, while capturing the image of one or more working robots 10 from a fixed location.

With the above-described example, the position information of the target is acquired. The controller 30, however, can acquire the captured image of the field F from the imaging apparatus 20 and output the position information (λ1, φ1), which the satellite positioning system is unable to acquire, as illustrated in Fig. 6.

In this case, the controller 30 acquires the positions (X1, Y1) and (X2, Y2) of the working robot(s) 10 at least at the two points on the image by the image processor 301 processing the acquired image; these positions are stored in a storage device 302A of the memory 302. The controller 30 also acquires the self-positions (λ1, φ1) and (λ2, φ2) of the satellite positioning coordinates output by the self-position detector(s) 101 of the working robot(s) 10 at the two points described above; these self-positions are stored in the storage device 302A as well.

When the working robot 10 is located at the position which the satellite positioning system cannot acquire position information, the position (Xn, Yn) of the working robot 10 on the image is acquired from the captured image. Then, the coordinate conversion processor 301B overlays the X-Y coordinates with the satellite positioning coordinates by using the position information on the two points stored in the storage device 302A to assign the satellite positioning coordinate (absolute coordinate) to each of the coordinate positions of the X-Y coordinates, and it outputs the absolute coordinate (λn, φn) corresponding to the position (Xn, Yn) on the image.

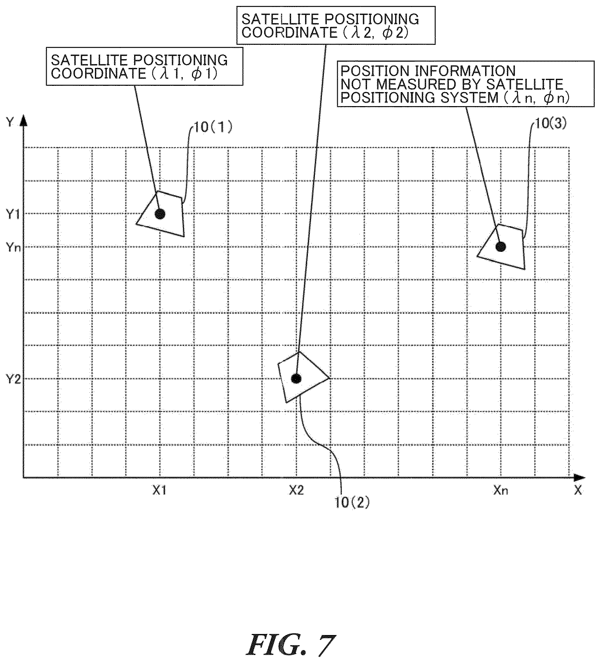

By this means, as illustrated in Fig. 7, the position information (λ1, φ1) and (λ2, φ2) of the satellite positioning coordinates of two or more different working robots 10(1) and 10(2) is obtained at the positions that the satellite positioning coordinates can be acquired; the positions (X1, Y1) and (X2, Y2) on the image are obtained as well. Based on them, it is possible to obtain the position information (λn, φn) of the working robot 10(3) at the position that positioning information cannot be acquired by the satellite positioning system.

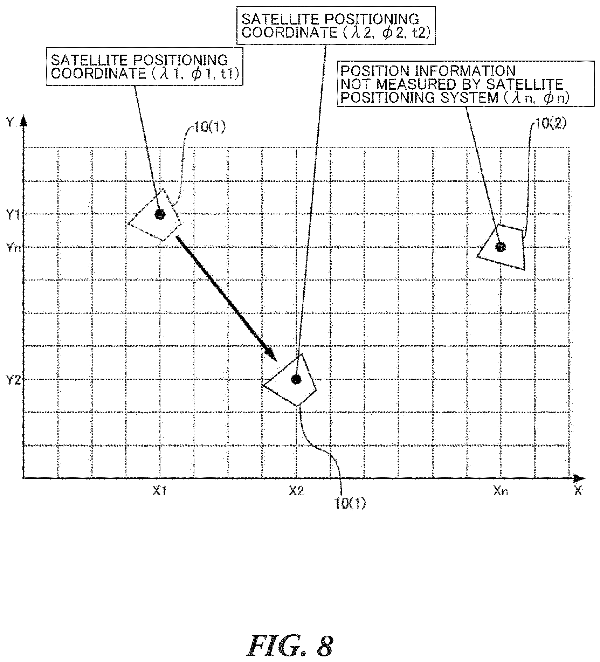

Moreover, the working robot 10(1) moves within the range in which satellite positioning coordinates can be acquired as illustrated in Fig. 8. Therefore, based on satellite positioning coordinates (λ1, φ1, t1) and (λ2, φ2, t2) at least at two points acquired at time t1 and time t2, and the positions (X1, Y1, t1) and (X2, Y2, t2) on the image, it is possible to obtain the position information (λn, φn, tn) of the working robot 10(2) at time tn, at the position at which positioning information cannot be acquired by the satellite positioning system from a position (Xn, Yn, tn) on the image.

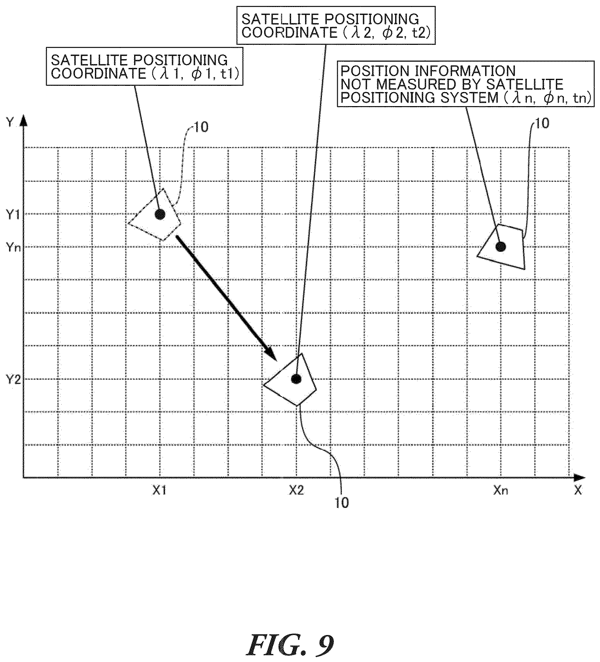

Furthermore, as illustrated in Fig. 9, based on the satellite positioning coordinates (λ1, φ1, t1) and (λ2, φ2, t2) acquired by the working robot 10 at least at two points at the past time 1 and time t2, and the positions (X1, Y1, t1) and (X2, Y2, t2) on the image, it is possible to obtain the position information (λn, φn, tn) of the working robot 10 at the current time (time tn) at the position at which positioning information cannot be acquired by the satellite positioning system from the position (Xn, Yn, tn) on the image.

Here, to acquire the positions (X1, Y1) and (X2, Y2) of the working robots 10 at least at the two points on the image, it is preferred that the points are selected so that the X-coordinates and the Y-coordinates are different from one other, respectively. By this means, it is possible to improve the precision of the position information assigned to each of the coordinates when the X-Y coordinates are overlaid with actual coordinates or satellite positioning coordinates.

When the X-Y coordinates are overlaid with the satellite positioning coordinates, appropriate coordinate conversion is needed. In particular, when the imaging apparatus 20 captures an image of the field F at a predetermined angle of view by inclining the optical axis obliquely downward from a predetermined height, a rectangular shape formed by the coordinate positions of the captured image should be transformed into a trapezoidal shape to form a virtual overhead image depending on the height and the angle of view.

In addition, when the magnification and the angle of view of the imaging apparatus 20 is adjusted, there is need to adjust the appropriate conversion processing, accordingly. This coordinate conversion includes well-known coordinate conversion to convert the X-Y coordinates as orthogonal plane coordinates and λ-φ coordinates (latitude-longitude coordinates) into each other. Here, the well-known coordinate conversion includes coordinate conversion to convert λ-φ coordinates without latitude-longitude coordinates and the X-Y coordinates into each other.

As described above, the working robot system 1 according to the embodiment of the invention includes the working robot 10 configured to output the self-position on the field F, the imaging apparatus 20 configured to capture an image of the field F, and the controller 30 configured to acquire the image of the field F captured by the imaging apparatus 20 and the self-position output by the working robot 10. Based on the position of the working robot 10 on the captured image and the self-position output by the working robot 10, the controller 30 assigns the position information to the remaining parts of the captured image.

According to this working robot system 1, even when the image captured by the imaging apparatus 20 includes an object (target) without position information, or a position or an area at which position information cannot be acquired, and even when the acquired position information has a low reliability, it is possible to assign the position information to all the positions on the image. By this means, the controller 30 (or the control device 10T) can control the autonomous travel of the working robot 10 toward an object (target) without position information on the image and also control the autonomous travel of the working robot 10 so as to avoid the object (obstacle) without position information on the image. In addition, the working robot 10 can autonomously travel in the area where the satellite positioning system is unavailable on the image.

Therefore, it is possible to control the autonomous travel of the working robot 10 in relation to an object without position information by using the self-position information output by the working robot 10 without acquiring the position information of the capturing position. In addition, it is possible to control the autonomous travel of the working robot 10 based on the absolute coordinates (latitude-longitude coordinates) at a relatively low cost even in a location where the satellite positioning system is unavailable.

The controller 30 of the working robot system 1 can be composed of a computer (server) installed in the facility M or the waiting facility N, a computer (server) of a management system to manage the imaging apparatus 20 installed as a security camera, a computer (server) of a management system to manage the work schedule of the working robot 10, and a computer (server) of the control device 10T provided in the working robot 10. The controller 30 can transmit the image that has the position information of the absolute coordinates to an electric device having a screen, for example, the display device 40. Therefore, the controller 30 can identify the absolute coordinate of the location where the satellite positioning system is unavailable on the screen.

The position information (self-position) of the working robot 10 input to the controller 30 is coordinates acquired by using the satellite positioning system, and therefore it is possible to obtain the absolute coordinate. By this means, precise position information is assigned to the positions on the image. In addition, it is possible to assign position information to the positions on the image without depending on information about the performance or the installation of the imaging apparatus 20 by inputting the position information of the working robot 10 at two or more points to the controller 30.

When there are a plurality of working robots 10 on the field F, the controller 30 can acquire the position information from each of the working robots 10. By this means, the controller 30 can acquire the position information at two or more points for a short time. In the case where the controller 30 acquires the position information from one working robot 10 moving between at least two points, the controller 30 can acquire the position information excluding individual errors of the self-position detectors 101 (GNSS sensors) outputting the position information.

In the working robot system 1, the number of the imaging apparatus 20 may be arbitrary. When more than one imaging apparatuses 20 capture images, respective pieces of position information may be assigned to the positions on each of the images captured by the imaging apparatuses 20; or the images captured by the imaging apparatuses 20 are composed to produce one image, and the respective pieces of position information may be assigned to the positions on the composite image. By using more than one imaging apparatuses 20, it is possible to target a wide range in the field F.

As described above, the embodiments of the present invention have been described in detail with reference to the drawings. However, the specific configuration is not limited to the embodiments, and the design can be changed within the scope of the attached claims. In addition, within the scope of the attached claims, the above-described embodiments can be combined by utilizing each other's technology as long as there is no particular contradiction or problem in the purpose and configuration.

### Reference Signs List

1: working robot system,
10: working robot, 10A: machine body, 10T: control device,
11: traveling device, 11A: traveling drive device,
12: working device, 12A: working drive device, 13: battery,
20: imaging apparatus, 20A: support member,
21: communication unit, 30: controller,
31: communication unit, 40: display device,
100: satellite, 101: self-position detector,
102: communication unit, 301: processor,
302: memory, 303: storage,
304: input and output interface, 305: communication interface,
306: bus, 301A: image processor,
302A: storage device, 301B: coordinate conversion processor,
401: display input part, F: field,
M: facility, N: waiting facility

## Claims

1. A working robot system (1) comprising:
at least one working robot (10) configured to output a position information on a field (F) of an actual coordinate output by a self-position detector (101) of said at least one working robot (10)
an imaging apparatus (20) configured to capture an image of the field (F); and
a controller (30) configured to acquire the image of the field (F) captured by the imaging apparatus (20) and the position information output by said at least one working robot (10), **characterized in that** the controller (30) is further configured to:
acquire at least at two points the position information of at least one of said at least one working robot (10),
receive by a touch or a cursor, via input to a display input part (401) of a display device (40), a position of a target on the captured image displayed on a screen of the display device (40),
assign position information to the target on the captured image based on a position of said at least one working robot (10) on the captured image and the position information output by said at least one working robot (10), and
output the captured image having the position information to the display device (40).

2. The working robot system (1) according to claim 1, wherein the controller (30) is further configured to acquire position information at the at least two points as said at least one working robot (10) moves.

3. The working robot system (1) according to claim 1, wherein the controller (30) is further configured to acquire position information at the at least two points at different times.

4. The working robot system (1) according to claim 1, wherein the controller (30) is further configured to acquire position information at the at least two points from one working robot (10) or different working robots (10(1), 10(2), 10(3)).

5. The working robot system (1) according to one of claims 1 to 4, wherein the imaging apparatus (20) is configured to adjust an imaging condition.

6. The working robot system (1) according to one of claims 1 to 5, wherein the controller (30) is further configured to control the autonomous travel of said at least one working robot (10) based on the position information.

## Patentansprüche

1. Arbeitsrobotersystem (1), umfassend:
mindestens einen Arbeitsroboter (10), der dazu konfiguriert ist, eine Positionsinformation auf einem Feld (F) einer tatsächlichen Koordinate auszugeben, die von einem Eigenpositionsdetektor (101) des mindestens einen Arbeitsroboters (10) ausgegeben wird;
eine Bildgebungsvorrichtung (20), die dazu konfiguriert ist, ein Bild des Feldes (F) aufzunehmen; und
eine Steuerung (30), die dazu konfiguriert ist, das von der Bildgebungsvorrichtung (20) aufgenommene Bild des Feldes (F) und die von dem mindestens einen Arbeitsroboter (10) ausgegebene Positionsinformationen zu erfassen,
**dadurch gekennzeichnet, dass** die Steuerung (30) ferner dazu konfiguriert ist:
mindestens an zwei Punkten die Positionsinformationen von mindestens einem des mindestens einen Arbeitsroboters (10) zu erfassen,
durch eine Berührung oder einen Cursor, über eine Eingabe in einen Anzeigeeingabeteil (401) einer Anzeigevorrichtung (40), eine Position eines Ziels auf dem aufgenommenen Bild zu empfangen, das auf einem Bildschirm der Anzeigevorrichtung (40) angezeigt wird,
dem Ziel auf dem aufgenommenen Bild basierend auf einer Position des mindestens einen Arbeitsroboters (10) auf dem aufgenommenen Bild und der von dem mindestens einen Arbeitsroboter (10) ausgegebene Positionsinformationen zuzuweisen, und
das aufgenommene Bild mit den Positionsinformationen an die Anzeigevorrichtung (40) auszugeben.

2. Arbeitsrobotersystem (1) nach Anspruch 1, wobei die Steuerung (30) ferner dazu konfiguriert ist, Positionsinformationen an den mindestens zwei Punkten zu erfassen, während sich der mindestens eine Arbeitsroboter (10) bewegt.

3. Arbeitsrobotersystem (1) nach Anspruch 1, wobei die Steuerung (30) ferner dazu konfiguriert ist, Positionsinformationen an den mindestens zwei Punkten zu unterschiedlichen Zeiten zu erfassen.

4. Arbeitsrobotersystem (1) nach Anspruch 1, wobei die Steuerung (30) ferner dazu konfiguriert ist, Positionsinformationen an den mindestens zwei Punkten von einem Arbeitsroboter (10) oder unterschiedlichen Arbeitsrobotern (10(1), 10(2), 10(3)) zu erfassen.

5. Arbeitsrobotersystem (1) nach einem der Ansprüche 1 bis 4, wobei die Bildgebungsvorrichtung (20) dazu konfiguriert ist, eine Bildgebungsbedingung einzustellen.

6. Arbeitsrobotersystem (1) nach einem der Ansprüche 1 bis 5, wobei die Steuerung (30) ferner dazu konfiguriert ist, das autonome Fahren des mindestens einen Arbeitsroboters (10) basierend auf den Positionsinformationen zu steuern.

## Revendications

1. Système de robot de travail (1) comprenant :
au moins un robot de travail (10) configuré pour délivrer en sortie des informations de position sur un champ (F) d'une coordonnée réelle délivrée en sortie par un détecteur de position propre (101) dudit au moins un robot de travail (10) ;
un appareil d'imagerie (20) configuré pour capturer une image du champ (F) ; et
un contrôleur (30) configuré pour acquérir l'image du champ (F) capturée par l'appareil d'imagerie (20) et les informations de position délivrées en sortie par ledit au moins un robot de travail (10),
**caractérisé en ce que** le contrôleur (30) est en outre configuré pour :
acquérir au moins en deux points les informations de position d'au moins l'un dudit au moins un robot de travail (10),
recevoir par un toucher ou un curseur, via une entrée sur une partie d'entrée d'affichage (401) d'un dispositif d'affichage (40), une position d'une cible sur l'image capturée affichée sur un écran du dispositif d'affichage (40),
attribuer des informations de position à la cible sur l'image capturée sur la base d'une position dudit au moins un robot de travail (10) sur l'image capturée et des informations de position délivrées en sortie par ledit au moins un robot de travail (10), et
délivrer en sortie l'image capturée ayant les informations de position au dispositif d'affichage (40).

2. Système de robot de travail (1) selon la revendication 1, dans lequel le contrôleur (30) est en outre configuré pour acquérir des informations de position aux au moins deux points lorsque ledit au moins un robot de travail (10) se déplace.

3. Système de robot de travail (1) selon la revendication 1, dans lequel le contrôleur (30) est en outre configuré pour acquérir des informations de position aux au moins deux points à des temps différents.

4. Système de robot de travail (1) selon la revendication 1, dans lequel le contrôleur (30) est en outre configuré pour acquérir des informations de position aux au moins deux points à partir d'un robot de travail (10) ou de robots de travail différents (10(1), 10(2), 10(3)).

5. Système de robot de travail (1) selon l'une des revendications 1 à 4, dans lequel l'appareil d'imagerie (20) est configuré pour ajuster une condition d'imagerie.

6. Système de robot de travail (1) selon l'une des revendications 1 à 5, dans lequel le contrôleur (30) est en outre configuré pour contrôler le déplacement autonome dudit au moins un robot de travail (10) sur la base des informations de position.
